# FASCICULE DE BREVET EUROPEEN

(11) **EP 3 092 711 B1**
(45) Date de publication et mention de la délivrance du brevet: **25.03.2020**
(21) Numéro de dépôt: 14833242.2
(22) Date de dépôt: 19.12.2014
(51) Int. Cl.: H02P 6/18, H02K 1/27

(54) **PROCÉDÉ POUR DETERMINER LA POLARITÉ D'UN PÔLE DE ROTOR DE MACHINE ÉLECTRIQUE TOURNANT**
VERFAHREN UM DIE POLARITÄT EINES ROTORS EINER DREHENDEN ELEKTRISCHEN MASCHINE ZU BESTIMMEN
METHOD FOR DETERMINING THE POLARITY OF A ROTOR POLE OF AN ELECTRICAL ROTATING MACHINE

(30) Priorité: 07.01.2014 FR 1450101
(43) Date de publication de la demande: 16.11.2016
(73) Titulaire: Moteurs Leroy-Somer, 16915 Angouleme Cedex 9 (FR)
(72) Inventeur: JANNOT, Xavier, 16000 Angouleme (FR); SAINT-MICHEL, Jacques, 16000 Angouleme (FR); TIENTCHEU-YAMDEU, Mathias, 16000 Angouleme (FR)
(74) Mandataire: Nony
(86) Numéro de dépôt international: PCT/IB2014/067109
(87) Numéro de publication internationale: WO 2015/104609

(56) Documents cités:
- EP-A1- 1 535 389
- US-A1- 2007 228 862
- US-A1- 2011 234 135

## Description

La présente invention concerne les machines électriques tournantes et notamment celles comportant un rotor à aimants permanents.

L'invention a pour objet la détermination de la position d'au moins un pôle du rotor à aimants permanents à l'arrêt et sans utilisation de capteur de position conventionnels.

L'invention concerne plus particulièrement un procédé pour déterminer la position d'au moins un pôle d'un rotor à aimants permanents ainsi qu'un dispositif de détermination de la position des pôles.

L'invention s'applique en général aux moteurs synchrones comportant un rotor à aimants permanents, et de préférence aux moteurs synchro-réluctants à aimants permanents ou aux machines ayant un rotor à concentration de flux.

Le pilotage d'un moteur synchrone à aimants permanents repose sur la connaissance de la position du rotor et notamment de la position et de la polarité des pôles nord et sud du rotor. Il est nécessaire de connaître la position et la polarité des pôles aussi bien au démarrage, lorsque le rotor est à l'arrêt, qu'en fonctionnement, lorsque le rotor est en rotation.

A cet effet, il est bien connu d'utiliser des capteurs de position, tels que par exemple des capteurs à effet Hall, des codeurs, des résolveurs ou tout autre type de capteur physique. Cependant, l'utilisation de tels capteurs entraîne un certain encombrement, un surcoût ainsi qu'un risque de défaillance dû à l'utilisation d'un composant supplémentaire.

Il est également connu, lorsque le rotor est en mouvement, soit d'utiliser un capteur de tension intégré à un variateur de la machine, soit de faire circuler dans le moteur un courant en appliquant une tension nulle en sortie du variateur par exemple, lequel courant peut être détecté et analysé par le variateur. La direction de ce courant est directement liée à la direction du rotor. De tels dispositifs sont par exemple connus des publications US 6 163 127, US2004/0070362 et US2007/0040528.

Lorsque le rotor est à l'arrêt, différentes méthodes permettent d'obtenir une information sur la position du rotor, mais l'information sur la polarité des pôles est manquante, incertaine ou coûteuse à obtenir. comme dans le document US 2011/0234135

Il est possible d'aligner le rotor du moteur dans une position connue par le variateur en y injectant un courant continu de direction connue et en attendant que le rotor, qui doit alors être libre, vienne s'aligner sur cette direction. En variante, dans le cas où le couple de charge au démarrage est faible, on peut également utiliser des observateurs capables de converger sans *a priori* vers la bonne position de la machine.

D'autres méthodes exploitent la saillance du rotor. On peut injecter des signaux à haute fréquence pour déterminer la position du rotor à 180° électriques près, c'est-à-dire que l'on connaît alors la position des pôles du rotor mais sans connaître leur polarité nord ou sud, comme décrit dans la demande US 2010/0171455.

Pour connaître la polarité des pôles, on peut analyser les harmoniques de rang élevé de la fréquence injectée, notamment l'harmonique de rang 2, comme décrit dans la demande US 2009/0128074. Cependant, il est alors nécessaire d'utiliser des capteurs de courant très précis et donc coûteux pour mesurer ces grandeurs, qui sont de par leur rang des harmoniques de très faible valeur.

Une autre méthode consiste à injecter un créneau de tension et à analyser la réponse obtenue en courant pour déterminer la polarité des pôles. Dans cette méthode, on utilise le phénomène de saturation au stator, en se fondant sur des variations de flux mesurées par rapport au flux des aimants à vide qui polarise le circuit magnétique du stator. La méthode décrite précédemment a un résultat d'autant plus fiable que le flux des aimants à vide est important, de manière à obtenir un écart suffisamment important entre les variations de flux. Cependant, cela n'est le cas que lorsque le flux produit par le rotor sur le circuit magnétique du stator est suffisamment important, c'est-à-dire par exemple dans le cas d'un rotor à forte concentration de flux ou dans le cas d'aimants à forte densité d'énergie, par exemple grâce à l'emploi de terres rares pour les aimants du rotor.

En revanche, cette méthode ne fournit pas de bons résultats lorsqu'elle est appliquée à un moteur synchro-réluctant comportant des aimants permanents au rotor, et plus particulièrement lorsque ces aimants permanents sont à basse densité d'énergie, étant par exemple des aimants réalisés en ferrite. En effet, dans le cas de moteurs synchro-réluctants et d'utilisation au rotor d'aimants permanents à faible densité d'énergie, le flux à vide peut être trop faible pour que le résultat obtenu soit suffisamment fiable et on peut avoir un taux d'erreur élevé. En outre, pour remédier à ce problème, on peut tenter d'obtenir une variation de courant plus importante, mais cela peut induire un risque élevé de démagnétisation des aimants à basse densité d'énergie.

Aussi, il existe un besoin pour bénéficier d'un procédé de détermination de la position et de la polarité des pôles d'un rotor de machine électrique tournante plus fiable et moins coûteux, même dans le cas où le flux des aimants à vide est relativement faible.

L'invention vise à répondre à ce besoin et a ainsi pour objet, selon un premier de ses aspects, un procédé pour déterminer la polarité d'un pôle de rotor de machine électrique tournante ayant une position estimée par rapport à un stator, le procédé comportant les étapes suivantes :
a) exciter en tension le stator de façon à générer successivement au sein d'une zone magnétique saturable dudit pôle deux flux magnétiques différents l'un en conjonction et l'autre en opposition avec le flux magnétique des aimants, de façon à saturer la zone magnétique saturable pour l'un au moins des flux magnétiques, et
b) déterminer la polarité du pôle en fonction des différences d'évolution dans le temps du courant généré dans le stator par les deux flux magnétiques.

Le procédé selon l'invention est de préférence mis en œuvre à l'arrêt, c'est-à-dire avant la mise en rotation de la machine.

Dans l'invention, on utilise non pas la saturation du stator mais la saturation du rotor pour déterminer la polarité des pôles du rotor. Le procédé selon l'invention permet de connaître la polarité des pôles du rotor sans risque de démagnétisation des aimants, risque d'autant plus important lorsque les aimants sont à basse densité d'énergie, et avec une fiabilité satisfaisante.

En outre, on peut éviter l'utilisation de capteurs de position conventionnels, ce qui permet de réduire le coût de la machine et de supprimer les risques de dysfonctionnement et de maintenance du capteur de position.

Le procédé selon l'invention réduit les risques de rotation non voulue du rotor.

La présence des zones magnétiques saturables du rotor peut également servir à améliorer l'assemblage des différents composants du rotor, notamment les aimants permanents et la masse magnétique rotorique, et contribuer à la robustesse mécanique du rotor.

Par "*zone magnétique saturable*" du rotor, on entend des zones du circuit magnétique du rotor qui peuvent être saturées très rapidement, c'est-à-dire bien avant la saturation du reste du circuit magnétique du rotor.

La présence des zones magnétiques saturables permet d'additionner au flux des aimants ou de soustraire du flux des aimants le flux créé dans le circuit magnétique du rotor par le courant circulant dans les enroulements du stator. En effet, le courant résultant monte plus vite lorsque le flux créé est en opposition de phase avec le flux des aimants. Cela s'explique par le fait que le flux de fuite des aimants à travers les zones magnétiques saturables polarise ces zones du circuit magnétique du rotor, et cela a pour effet de réduire l'inductance de la machine.

Chaque pôle du rotor comporte au moins une zone magnétique saturable.

Le rotor comporte de préférence des aimants permanents à basse densité d'énergie. Les aimants permanents peuvent par exemple être réalisés en ferrite.

Les aimants peuvent, en variante, être à forte densité d'énergie, mais avec un flux à vide faible. Par "flux à vide faible", on entend que la force électromotrice pour une tension appliquée de 100 V est inférieure à 65V, mieux inférieure à 50V.

L'excitation du stator en tension peut consister à appliquer au stator une première et une deuxième tension qui peuvent être en forme de créneau de tension, ayant par exemple une forme choisie dans la liste suivante : créneau de tension, rampe de tension, onde sinusoïdale de tension ou toute combinaison de ces formes, cette liste n'étant pas limitative.

Les première et deuxième tensions peuvent être de signe opposé.

La deuxième tension est de préférence de même amplitude que la première tension.

Les courants résultants sont compris entre 0% du courant maximal avant démagnétisation et 50% du courant maximal, étant par exemple compris entre 2,5% et 50% du courant maximal, mieux entre 5% et 40% du courant maximal. On obtient des variations suffisantes pour permettre de distinguer la polarité du pôle grâce à la présence des zones magnétiques saturables. Avec un rotor dépourvu de zones magnétique saturables, il faudrait un courant supérieur à la valeur du courant maximal pour pouvoir distinguer une différence dans les variations de courant et déterminer la polarité des pôles. Il y aurait alors des risques importants de démagnétisation des aimants.

On détermine à l'étape b) lequel des courants générés dans le stator par les deux flux magnétiques est le plus faible et/ou le plus en retard par rapport à l'autre. Le courant généré le plus faible ou le plus en retard par rapport à l'autre indique laquelle des deux tensions a été appliquée en conjonction avec le ou les aimants du pôle correspondant, c'est-à-dire qu'on obtient ainsi l'indication recherchée sur la polarité du pôle étudié. Si la tension positive appliquée génère un flux en conjonction avec le flux des aimants permanents, il s'agit du pôle nord. Le courant présentant la plus faible amplitude correspond à l'application d'une tension générant un flux en conjonction avec le pôle nord.

Autrement dit, le pôle nord du rotor correspond au cas où le niveau de courant est le plus faible au bout d'une même durée et pour une même amplitude de la tension appliquée. De manière complémentaire le pôle sud du rotor correspond au cas où le niveau de courant est le plus élevé au bout d'une même durée et pour une même amplitude de la tension appliquée.

Il est à noter que cela va à l'encontre du critère généralement établi pour les machines à aimants permanents à haute densité d'énergie. Cela provient du fait qu'on exploite dans l'invention le phénomène de saturation des zones magnétiques saturables du rotor. Le courant monte plus vite lorsque le flux créé est en opposition de phase avec le flux des aimants. Cela s'explique par le fait que le flux de fuite des aimants à travers les zones magnétiques saturables polarise ces zones du circuit magnétique du rotor; ce qui a pour effet de réduire l'inductance de la machine.

En variante ou additionnellement, on peut déterminer à l'étape b) le signe de la phase de l'un des harmoniques, notamment le deuxième harmonique, en ayant excité le stator à l'étape a) avec un signal à haute fréquence.

Le cas où le signe de la phase est positif correspond à l'application d'un signal haute fréquence générant un flux en conjonction avec le pôle nord, ce qui est le contraire du critère généralement établi.

On peut déterminer la position estimée du pôle du rotor par rapport au stator en appliquant des signaux à haute fréquence dans le stator puis en analysant les tensions et courants haute fréquence résultants pour en déduire la position d'un pôle du rotor. Cette position d'un pôle du rotor a une imprécision quant à la polarité du pôle.

L'injection de signaux à haute fréquence ne nécessite pas de bloquer mécaniquement le rotor. Le procédé pour déterminer la polarité d'un pôle peut se faire sans avoir à contraindre mécaniquement l'arbre de la machine pour éviter sa rotation.

### Ponts

Le rotor peut comporter des aimants permanents disposés dans des logements de manière à définir des pôles du rotor. Les logements peuvent être disposés en forme d'arc de cercle ou de V.

Une zone magnétique saturable peut être (i) un pont de matière magnétique ménagé entre des logements du rotor destinés à recevoir les aimants permanents, lesquels sont disposés de manière à définir les pôles du rotor, et/ou (ii) un pont de matière magnétique disposé entre un logement et l'entrefer de la machine. Les zones magnétiques saturables peuvent être disposées de part et d'autre des aimants.

Les ponts ménagés entre les logements peuvent être orientés radialement, c'est-à-dire disposés le long d'un axe radial du pôle correspondant. Par « *axe radial du pôle* », on entend un axe du pôle orienté radialement, c'est-à-dire selon un rayon du rotor. Il peut s'agir d'un axe de symétrie pour le pôle. Cet axe radial peut intersecter le sommet du pôle.

En variante, ils peuvent être orientés obliquement, c'est-à-dire que le pont de matière s'étend généralement selon un axe longitudinal du pont orienté obliquement en rapprochement de l'axe radial du pôle correspondant du rotor, lorsque l'on se déplace en s'éloignant de l'axe de rotation. Les ponts de matière orientés obliquement permettent de supporter les efforts centrifuges auxquels peut être soumis le rotor, sans pénaliser la machine sur le plan magnétique. Par « *axe longitudinal du pont* » on désigne l'axe disposé de manière centrale par rapport aux deux petits côtés des logements adjacents définissant ce pont de matière. Cet axe est de préférence rectiligne. Les ponts de matière formés entre les logements peuvent s'étendre obliquement généralement selon un axe longitudinal du pont qui peut former avec l'axe radial du pôle correspondant du rotor un angle d'une valeur non nulle et supérieure à 5°, mieux supérieure à 10°, par exemple de l'ordre d'environ 15°. L'angle peut être inférieur à 45°, mieux inférieur à 30°, voire inférieur à 20°.

Les ponts de matière orientés circonférentiellement permettent de maintenir la cohésion du rotor contre les efforts mécaniques que subit la machine.

Les ponts de matière peuvent avoir une largeur, mesurée perpendiculairement à leur axe longitudinal, inférieure à 8 mm, mieux inférieure à 7 mm. Afin d'optimiser la distribution du flux magnétique dans le rotor, on cherche à limiter la taille des ponts afin de minimiser le passage du flux magnétique dans ces ponts et les pertes de flux dans le pôle. En revanche, il est nécessaire que ces ponts aient une épaisseur suffisante pour éviter leur rupture, le rotor étant très fortement sollicité par les forces centrifuges. Les ponts de matière peuvent avoir une largeur supérieure à 0,5 mm, voire supérieure à 6 mm.

### Dispositif

L'invention a encore pour objet, selon un autre de ses aspects, indépendamment ou en combinaison avec ce qui précède, un dispositif pour déterminer la polarité d'un pôle de rotor de machine électrique tournante ayant une position estimée par rapport à un stator, le dispositif comportant :
a) des moyens pour exciter en tension le stator de façon à générer successivement au sein d'une zone magnétique saturable dudit pôle deux flux magnétiques différents l'un en conjonction et l'autre en opposition avec le flux magnétique des aimants, de façon à saturer la zone magnétique saturable pour l'un au moins des flux magnétiques, et
b) des moyens pour déterminer la polarité du pôle en fonction des différences d'évolution dans le temps du courant généré dans le stator par les deux flux magnétiques.

### Variateur et machine

L'invention a encore pour objet, selon un autre de ses aspects, un variateur de fréquence pour moteur électrique, comportant un dispositif pour déterminer la polarité tel que décrit plus haut.

L'invention a encore pour objet, selon un autre de ses aspects, une machine électrique tournante comportant :
- un moteur comportant un rotor à aimants permanents, et
- un variateur tel que décrit plus haut, pour contrôler le moteur.

La machine peut comporter un stator bobiné sur dents. En variante, le stator peut être à bobinage distribué.

La machine peut constituer un moteur synchrone.

La machine est de préférence dépourvue de capteur de position conventionnel. Autrement dit, on peut obtenir grâce à la machine, selon l'invention, la polarité du pôle étudié sans avoir à utiliser de capteur de position conventionnel.

La machine peut fonctionner à une vitesse périphérique nominale (vitesse tangentielle prise au diamètre extérieur du rotor) qui peut être supérieure ou égale à 100 mètres par seconde, la machine selon l'invention permettant un fonctionnement à des vitesses importantes si cela est souhaité.

La machine peut avoir une taille relativement élevée. Le diamètre du rotor peut être supérieur à 50 mm, mieux supérieur à 80 mm, étant par exemple compris entre 80 et 500 mm.

### Rotor

Le rotor comporte une masse magnétique rotorique dans laquelle sont ménagés des logements destinés à recevoir les aimants permanents, de manière à définir les pôles du rotor. Le rotor peut comporter au moins un aimant par pôle, par exemple un seul aimant par pôle, ou en variante deux aimants, voire plus d'aimants par pôle.

Le rotor peut être à concentration de flux ou synchro-réluctant à aimants permanents.

Chaque pôle du rotor peut comporter au moins une zone magnétique saturable.

Le rotor peut comporter au moins trois logements par pôle, chaque pôle ayant un axe radial du pôle, des aimants permanents étant insérés dans des logements. Des aimants permanents peuvent être insérés dans tout ou partie des logements, par exemple dans au moins la moitié des logements, voire dans plus des deux tiers des logements, mieux encore dans tous les logements.

Les logements peuvent être de forme allongée et comporter chacun deux petits côtés. Les logements peuvent être disposés en une ou plusieurs rangées par pôle, une rangée comportant au moins deux, mieux au moins trois logements disposés consécutivement, leurs petits côtés définissant entre deux logements consécutifs d'une même rangée un pont de matière.

La disposition des logements en rangées permet de concentrer le flux des aimants et d'introduire une saillance magnétique afin d'obtenir avec des aimants en ferrites des performances intéressantes.

Dans un exemple de réalisation, les logements d'une même rangée sont disposés selon une branche centrale et deux branches latérales situées de part et d'autre de la branche centrale, donnant par exemple une configuration en U, la branche centrale étant par exemple seule à comporter un ou plusieurs aimants permanents, les branches latérales ne logeant pas d'aimant permanent.

Pour un même pôle, les logements de ce pôle peuvent être disposés en une seule rangée. La concavité de la rangée peut être orientée vers le sommet du pôle, c'est à dire vers l'entrefer.

De préférence, pour un même pôle, les logements de ce pôle sont disposés en plusieurs rangées, chacune de concavité qui peut être orientée vers le sommet du pôle, notamment en rangées sensiblement concentriques. Par « concentriques », on entend que des axes médians des logements des rangées, pris dans un plan perpendiculaire à l'axe de rotation du rotor, se coupent en un même point. Cette disposition en plusieurs rangées concentriques permet d'améliorer la concentration du flux et la saillance magnétique sans nécessairement avoir à augmenter la taille des logements ou la quantité d'aimants permanents nécessaires pour obtenir des performances équivalentes. Le nombre de rangées par pôle peut notamment être de deux, trois ou quatre.

Lorsque le rotor comporte pour un même pôle plusieurs rangées, ces dernières peuvent être de longueur décroissante lorsque l'on se déplace en direction de l'entrefer, la plus longue étant plus proche de l'axe de rotation et la plus courte du côté de l'entrefer. La longueur d'une rangée correspond à la longueur cumulée des logements de cette rangée.

Au moins, deux logements de deux rangées d'un même pôle peuvent s'étendre parallèlement l'un à l'autre. Tous les logements d'une rangée peuvent s'étendre parallèlement aux logements correspondants d'une autre rangée.

Une rangée peut comporter un nombre de logements strictement supérieur à un, par exemple au moins deux logements, mieux trois logements. Une rangée peut par exemple comporter un logement central et deux logements latéraux. Au moins une rangée peut comporter un nombre impair de logements, par exemple au moins trois logements.

Deux rangées d'un même pôle peuvent avoir un nombre de logements différent. Dans un exemple de réalisation de l'invention, au moins un pôle comporte une rangée de logements comportant un nombre inférieur de logements à ceux d'une autre rangée de ce pôle, par exemple deux contre trois pour l'autre rangée. La rangée ayant le plus faible nombre de logements est de préférence la plus proche de l'entrefer et la plus éloignée de l'axe de rotation.

La disposition des logements et/ou des ponts de matière dans une rangée est de préférence symétrique par rapport à l'axe radial du pôle.

Dans une rangée, les logements peuvent être disposés en V ou en U, le U pouvant avoir une forme évasée vers l'entrefer. Autrement dit, les logements constituant les branches latérales du U peuvent être non parallèles entre eux. Ainsi, l'inclinaison des ponts radiaux peut être opposée à celle des logements latéraux, par rapport à l'axe radial du pôle.

Les logements peuvent s'étendre chacun, lorsqu'observés en section dans un plan perpendiculaire à l'axe de rotation du rotor, selon un axe longitudinal qui peut être rectiligne ou courbe.

Les logements peuvent avoir une largeur constante ou variable lorsque l'on se déplace le long de leur axe longitudinal, dans un plan perpendiculaire à l'axe de rotation du rotor.

Les petits côtés d'un logement sont orientés en direction de l'axe radial du pôle lorsque l'on se déplace en éloignement de l'axe de rotation, et convergent par exemple sensiblement vers le sommet du pôle.

Les logements peuvent avoir, en section transversale, c'est-à-dire perpendiculairement à l'axe de rotation, une forme générale rectangulaire ou trapézoïdale, cette liste n'étant pas limitative.

Les petits côtés d'un logement peuvent être perpendiculaires aux grands côtés du logement. Les petits côtés d'un logement peuvent être inclinés par rapport aux grands côtés du logement.

Au moins un logement peut avoir deux grands côtés, l'un des grands côtés étant plus petit que l'autre. Dans ce cas, par exemple lorsque le logement est de forme générale trapézoïdale, le plus court des grands côtés peut être situé plus près de l'entrefer que le plus long des grands côtés.

Les petits côtés d'un logement peuvent être rectilignes ou courbes.

Les aimants permanents peuvent être de forme générale rectangulaire. Compte-tenu de la forme des logements, la mise en place des aimants dans les logements peut laisser un espace libre dans le logement entre les aimants et les petits côtés du logement correspondant. L'espace libre est par exemple de forme générale triangulaire.

La masse rotorique peut être formée d'un empilement de tôles ou d'une ou plusieurs tôle(s) individuelle(s) enroulée(s) sur elle(s)-même(s) autour de l'axe de rotation. Chaque couche de tôle de la masse rotorique peut être d'un seul tenant. Le rotor peut être dépourvu de pièces polaires individuelles.

Le rotor peut comporter un nombre de pôles compris entre 2 et 12, mieux entre 4 et 8.

L'invention pourra être mieux comprise à la lecture de la description détaillée qui va suivre, d'exemples de réalisation non limitatifs de celle-ci, et l'examen du dessin annexé, sur lequel :
- la figure 1 est une vue schématique et partielle d'une machine électrique tournante conforme à l'invention,
- les figures 2, 2a et 2b sont des vues analogues à la figure 1 de variantes de réalisation,
- la figure 3 illustre l'évolution du courant dans le stator de la figure 1 durant l'application d'un créneau de tension,
- la figure 4 est une vue analogue à la figure 1 d'une machine dépourvue de zones magnétiques saturables
- la figure 5 illustre l'évolution du courant dans le stator de la figure 4 durant l'application d'un créneau de tension,
- les figures 6a et 6b illustrent l'évolution des lignes de champ dans la machine de la figure 1,
- la figure 7 illustre une rampe de tension,
- la figure 8 illustre l'évolution du courant dans le stator de la figure 1 durant l'application d'une rampe de tension,
- les figures 9a, 9b, 9c, 11a, 11b et 11c illustrent respectivement les mesures de la vitesse, de la position et de la tension et de l'intensité dans la machine de la figure 1 lors de deux mises en œuvre du procédé de l'invention, et
- les figures 10a et 10b et 12a et 12b sont des vues de détails respectivement des figures 9b et 9c et 11b et 11c.

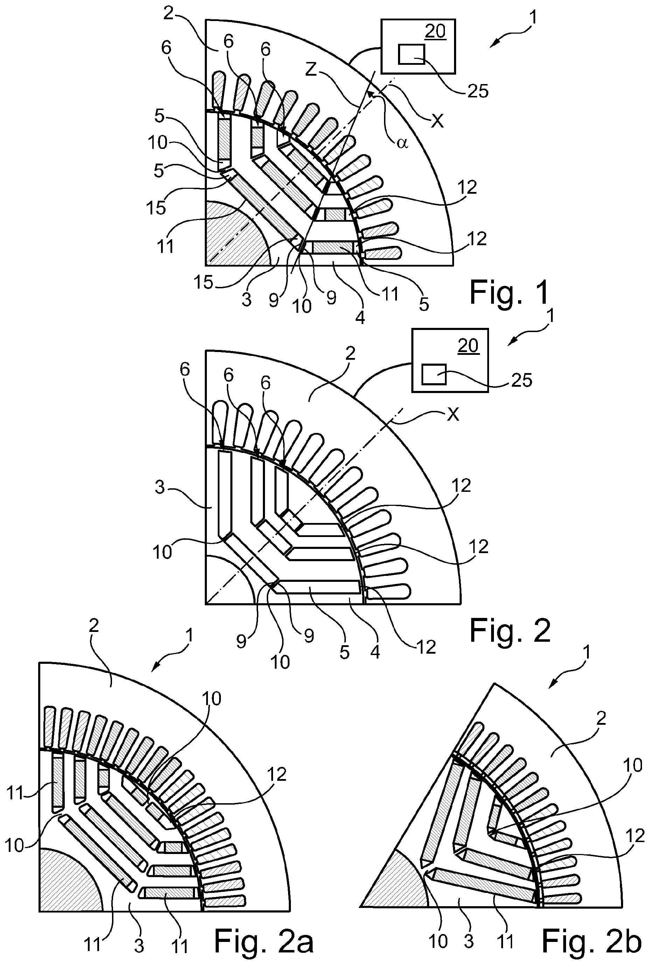

On a illustré à la figure 1 une machine électrique tournante 1, comportant un stator 2 et un rotor 3 à concentration de flux, ayant une masse magnétique rotorique 4 dans laquelle sont ménagés des logements 5 de manière à définir les pôles du rotor, chaque pôle ayant un axe radial X.

Dans cet exemple, le rotor comporte neuf logements 5 par pôle, qui sont disposés en trois rangées concentriques 6 autour de chacun des pôles, la concavité des rangées étant orientée vers l'entrefer. Une rangée 6 comporte trois logements 5 disposés consécutivement dans la rangée. Les trois rangées 6 d'un même pôle sont de longueur décroissante lorsque l'on se déplace en direction de l'entrefer, la plus longue étant située du côté de l'axe de rotation et la plus courte du côté de l'entrefer.

Les logements 5 sont de forme allongée. Ils comportent chacun deux petits côtés 9, les petits côtés respectifs 9 de deux logements consécutifs 5 d'une même rangée 6 définissant entre eux un pont de matière 10. Le pont de matière 10 s'étend généralement selon un axe longitudinal Z du pont orienté en rapprochement de l'axe radial X du pôle correspondant du rotor 1 lorsque l'on s'éloigne de l'axe de rotation. L'axe longitudinal Z du pont de matière 10 est rectiligne et forme avec l'axe radial X du pôle correspondant du rotor un angle α d'une valeur non nulle et supérieure à 5°, qui est dans cet exemple de l'ordre d'environ 15°.

Les petits côtés 9 d'un logement sont orientés en direction de l'axe radial X du pôle lorsque l'on se déplace en direction de l'entrefer. Les logements 5 sont de forme générale trapézoïdale, et ont deux grands côtés, l'un des grands côtés étant plus petit que l'autre, le plus court des grands côtés étant plus près de l'entrefer que le plus long des grands côtés.

Les logements latéraux sont séparés de l'entrefer par des ponts de matière circonférentiels 12. Ces ponts de matière circonférentiels 12 ne reprennent qu'une partie assez faible des efforts centrifuges, tandis que les ponts 10 qui séparent deux logements doivent supporter l'essentiel de la charge des efforts centrifuges.

Le rotor 3 peut comporter des aimants permanents 11 insérés dans chacun ou dans certains des logements 5. Les aimants permanents sont à basse densité d'énergie. Les aimants permanents 11 sont dans cet exemple de forme générale rectangulaire en section transversale. La mise en place des aimants dans les logements peut laisser un espace libre 15 dans chaque logement entre l'aimant et les petits côtés du logement correspondant.

Comme on le voit sur la figure 1, certains des logements peuvent être dépourvus d'aimant. Dans l'exemple de réalisation illustré, les logements de l'une des rangées sont disposés en une branche centrale et deux branches latérales, la branche centrale étant seule à comporter un aimant permanent, les logements latéraux ne comportant pas d'aimant permanent.

En outre, on voit sur la figure 1 que les logements centraux d'une rangée peuvent avoir une longueur supérieure à celle des logements latéraux de ladite rangée, ainsi les branches latérales du U sont plus courtes que la branche centrale.

C'est le contraire dans la variante de réalisation illustré à la figure 2.

En outre, sur cette figure 2, les ponts ménagés entre les logements sont orientés radialement, c'est-à-dire disposés le long d'un axe radial du pôle correspondant.

En variante encore, la rangée D de logements la plus proche de l'entrefer peut comporter un pont central 10, comme illustré sur la figure 2a.

En variante encore, les logements peuvent être disposés en V plutôt qu'en U, comme illustré sur la figure 2b.

Les ponts de matière 10 et les ponts circonférentiels 12 qui viennent d'être décrits forment des zones magnétiques saturables du rotor.

La machine 1 illustrée à la figure 1 comporte en outre un variateur 20 pour contrôler le moteur, lequel comporte un dispositif 25 de détermination à l'arrêt de la polarité des pôles du rotor, la machine étant dépourvue de capteur de position conventionnel.

Le dispositif 25 de détermination de la polarité comporte :
a) des moyens pour exciter en tension le stator 2 de façon à générer successivement au sein d'une zone magnétique saturable 10, 12 dudit pôle deux flux magnétiques différents l'un en conjonction et l'autre en opposition avec le flux magnétique des aimants 11, de façon à saturer la zone magnétique saturable 10, 12 pour l'un au moins des flux magnétiques, et
b) des moyens pour déterminer la polarité du pôle en fonction des différences d'évolution dans le temps du courant généré dans le stator par les deux flux magnétiques.

On va maintenant décrire en détail le fonctionnement de ce dispositif et le déroulement du procédé de détermination de la polarité conforme à l'invention.

### Détermination de la position des pôles

En l'absence de courant dans les enroulements du stator, les aimants permanents polarisent le circuit magnétique.

On détermine dans un premier temps une position estimée d'un pôle du rotor, par exemple en appliquant des signaux à haute fréquence dans le stator puis en analysant les tensions et courant haute fréquence résultants pour en déduire la position du pôle du rotor.

Cette détermination peut se faire en variante par tout autre moyen.

Dans cette étape, on fait une hypothèse sur la polarité du pôle, qui pour le moment inconnue à 180° électriques près, et qui sera vérifiée ou infirmée dans les étapes suivantes.

### Excitation en tension

Lorsque l'on applique au stator une tension sous la forme d'un créneau de tension pendant un temps t défini de manière à créer un flux magnétique dans une zone magnétique saturable 10, 12 dudit pôle du rotor, on peut mesurer un courant résultant dans le stator.

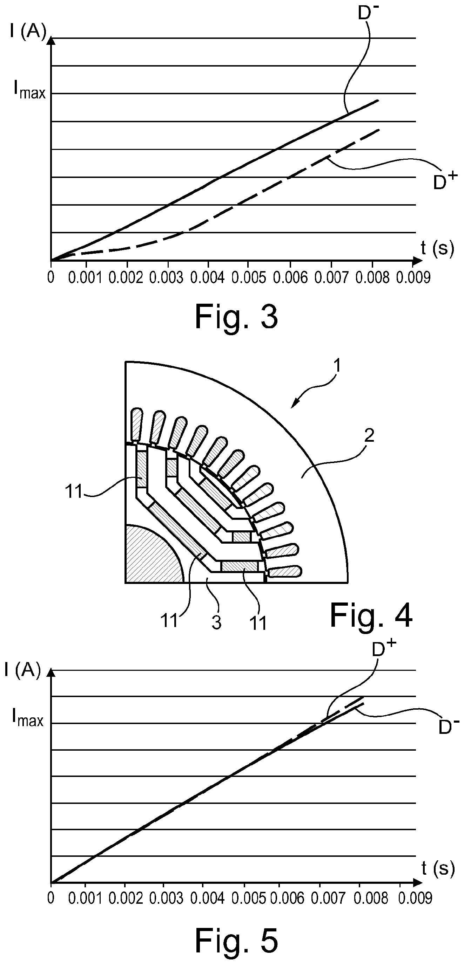

La figure 3 montre l'évolution du courant dans les enroulements du stator de la figure 1 lorsque le flux créé par un créneau de tension est appliqué en conjonction (courbe D+) ou en opposition de phase (courbe D-) avec le flux des aimants.

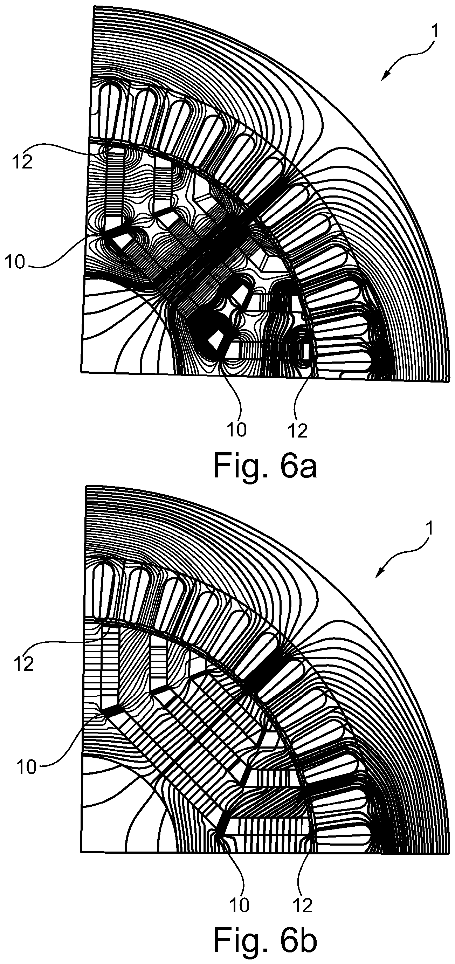

L'allure de la courbe de courant D+ dans le cas où le flux créé par le créneau de tension est en conjonction avec le flux des aimants est due à l'inversion du sens du flux dans les zones magnétiques saturables 10, 12 du rotor, comme on peut le voir sur les figures 6a et 6b, lesquelles montrent l'évolution de la distribution du flux dans le moteur de la figure 1 dans le cas où le flux créé est en conjonction avec celui des aimants. Il est à noter l'évolution des lignes de champ dans les différentes zones magnétiques saturables 10, 12 du rotor. La figure 6a illustre le flux à t=0s et la figure 6b à t=0.0035s. La présence des zones magnétiques saturables 10, 12 ralentit la montée du courant et permet de discriminer les sens des pôles nord et sud, comme on va l'expliquer dans la suite.

A contrario, la figure 5 montre l'évolution du courant dans les enroulements du stator lorsque le flux créé par le créneau de tension est appliqué en conjonction (courbe D+) ou en opposition de phase (courbe D-) avec le flux des aimants, dans le cas où le rotor ne possède pas de zones magnétiques saturables, comme c'est le cas de la machine de la figure 4, laquelle comporte un rotor avec des aimants à faible densité d'énergie mais dépourvu de zones magnétiques saturables.

Sans ces zones magnétiques saturables, il faut un courant supérieur au courant maximal avant démagnétisation Iₘₐₓ pour commencer à déceler le sens des pôles. Il y a des forts risques de démagnétiser les aimants si on utilise un courant aussi élevé. En revanche, avec de faibles niveaux de courant, inférieurs au courant maximal Iₘₐₓ, par exemple compris entre 2,5% et 50% du courant maximal Iₘₐₓ, et des zones magnétiques saturables, la distinction entre l'évolution du courant dans les deux cas est plus nette. Cela élimine le risque de démagnétisation des aimants.

On voit ainsi que sans zones magnétique saturable, l'application d'une tension dans les deux sens ne permet pas de discriminer le sens des pôles avec précision et de manière robuste.

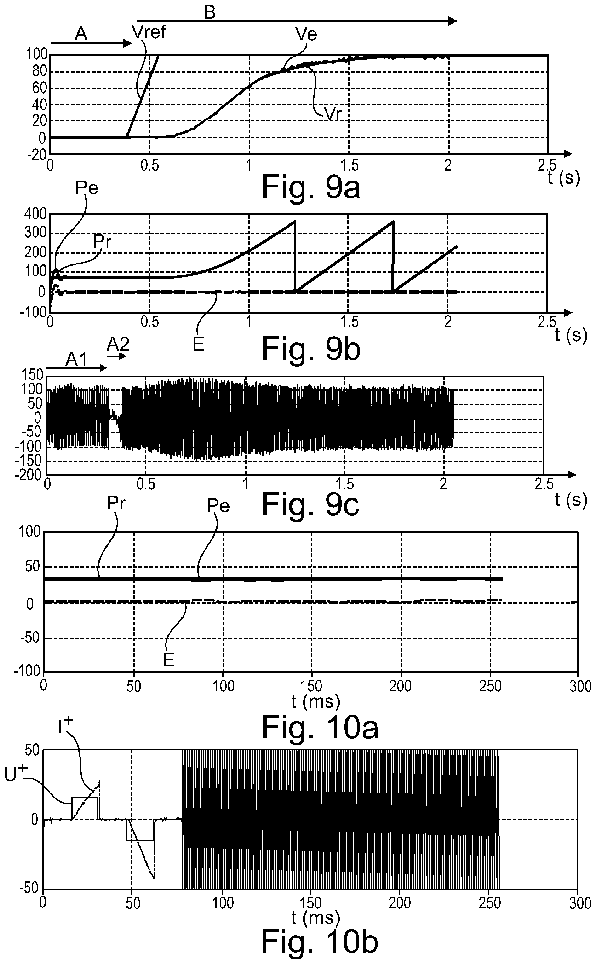

On va maintenant décrire en référence aux figures 9a à 9c et 10a et 10b un exemple de mise en œuvre du procédé selon l'invention, avec la machine de la figure 2, qui est un moteur synchro-réluctant avec des aimants permanents en ferrite. Les mesures sont effectuées avec le variateur 20.

On procède au démarrage avec une consigne de vitesse Vref de 100trs/min, comme illustré sur la figure 9a qui montre l'évolution dans le temps de la vitesse consigne Vref, de la vitesse estimée Ve et de la vitesse réelle Vr. La phase A est celle de la détermination de la position initiale, suivie de la phase B de démarrage effectif. La phase A comporte une phase A1 de détermination de la position estimée Pe et une phase A2 de détermination de la polarité. Les figures 10a et 10b sont des vues de détails de la phase A2.

On détermine d'abord une position estimée Pe comme décrit ci-dessus (phase A1). De fait, cette position estimée Pe a en réalité une ambiguïté de 180° électriques qui sera levée grâce à la phase A2. Les figures 9b et 10a montre l'évolution dans le temps de la position réelle Pr, de la position estimée Pe et de l'erreur E entre les deux.

Pour ce faire, on applique au stator une première tension sous la forme d'un petit créneau de tension pendant un temps *t* défini de manière à créer un flux magnétique dans une zone magnétique saturable 10,12 dudit pôle du rotor, et on mesure un premier courant résultant dans le stator.

On applique ensuite une deuxième tension sous la forme d'un deuxième créneau de tension déphasé spatialement de 180° électriques par rapport au premier créneau de tension pendant le temps *t* défini de manière à créer un flux magnétique dans la zone magnétique saturable 10,12 dudit pôle du rotor, et on mesure un deuxième courant résultant dans le stator.

L'évolution de la tension U+ et de l'intensité résultante I+ sont illustrées sur les figures 9c et 10b.

On crée ainsi dans un cas un flux dans le même sens que celui des aimants - en conjonction - et dans l'autre cas, un flux en opposition de phase par rapport au flux des aimants.

Dans ce qui précède, on a utilisé un créneau de tension. Bien entendu, on ne sort pas du cadre de la présente invention s'il en est autrement, et on peut par exemple utiliser une autre forme pour la tension d'excitation.

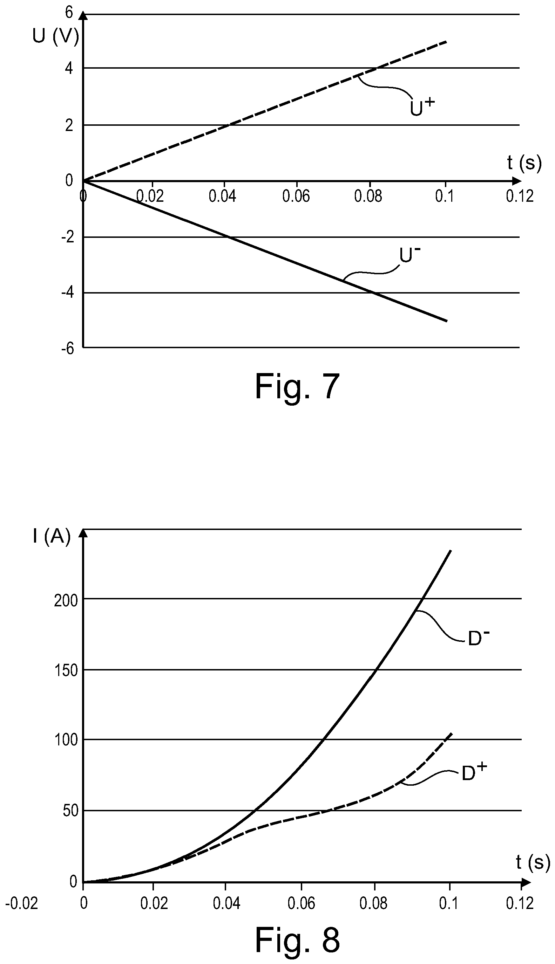

A titre d'exemple, on a illustré aux figures 7 et 8 l'utilisation d'une rampe de tension. On a appliqué une rampe de tension U+ comme illustré sur la figure 7 pendant un temps t défini de manière à créer un flux orienté dans la même direction que celle des aimants puis on a appliqué la même rampe de tension U- mais déphasée spatialement de 180° électriques. Ce faisant, dans un cas le flux créé par la rampe de tension sera dans le même sens que celui des aimants - en conjonction - et dans l'autre cas, il sera en opposition de phase par rapport au flux des aimants.

La figure 8 montre l'évolution du courant dans les enroulements du moteur lorsque le flux créé par la rampe de tension U+ est appliqué en conjonction (courbe D+) ou en opposition de phase (courbe D-) avec le flux des aimants et dans le cas où le rotor possède des circuits magnétiques saturables. On constate au bout d'un temps t défini que le courant atteint deux valeurs différentes, ce qui permet de discriminer les sens des pôles nord et sud.

En variante encore, l'excitation du stator par des tensions sinusoïdales peut permettre de déterminer la polarité des pôles du rotor. Dans ce cas, on détecte le signe de la phase de la composante du courant généré à deux fois la fréquence d'excitation (harmonique de rang 2). Le pôle nord correspond à un déphasage positif, ce qui est l'inverse du critère généralement considéré dans les solutions classiques mettant en œuvre des tensions sinusoïdales pour la détection de la polarité.

### Détermination de la polarité

On peut déduire la polarité du pôle du rotor en fonction des premier et deuxième courants mesurés qui sont générés dans le stator par les deux flux magnétiques. Pour ce faire, on détermine à l'étape b) lequel des premier et deuxième courants est le plus faible et/ou le plus en retard par rapport à l'autre.

Le pôle nord du rotor correspond au cas où le niveau de courant est le plus faible au bout d'une même durée et pour une même amplitude de la tension appliquée.

Dans l'essai des figures 9a à 9c, l'amplitude du courant résultant du premier créneau de tension est plus faible que la seconde, comme montré en détail sur la figure 10b. La première variation de courant est de 26A environ, la seconde de -40A. Le courant maximal du moteur est de 230 A. On a donc à la fois une différence suffisamment marquée de 11,3% et - 17,5% pour prendre une décision fiable tout en restant à des niveaux de courant faibles par rapport au courant maximal.

Contrairement à la situation classique, on conclut ici que la position estimée Pe est la bonne, comme le confirme la mesure Pr indiquée par un capteur de position (résolveur) utilisé ici dans un souci de vérification seulement, illustrée sur les figures 9b et 10a.

Le variateur démarre alors avec cette position (phase B), et l'on voit sur la figure 9b une bonne superposition entre l'angle donné par le capteur de position et l'angle obtenu sans capteur mécanique par le procédé selon l'invention.

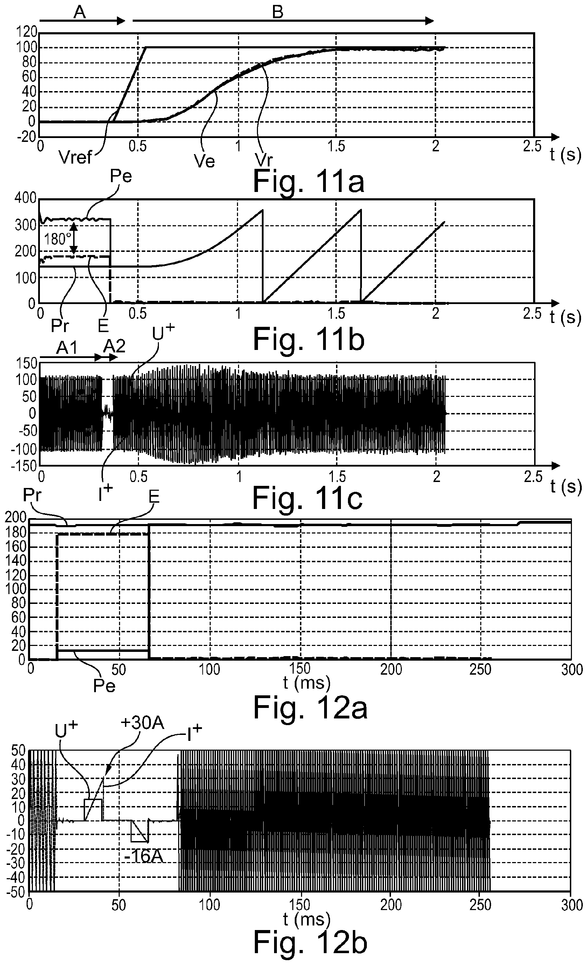

Dans la variante de réalisation illustrée aux figures 11a à 11c et 12a et 12b, tout est identique à l'essai précédent sauf qu'à l'issue de la phase A1, la position estimée Pe est à 180° électriques de celle Pr indiquée par le résolveur, comme l'indique la courbe de la figue 11b. A l'issue de la phase A2, le courant correspondant au premier créneau de tension est le plus grand, la première variation de courant étant de 30A, la seconde de - 16A, soit respectivement +13% et -7%. La différence est suffisamment marquée entre les deux sens pour que la levée de l'ambiguïté sur la polarité soit très nette avec des niveaux de courant constatés toujours largement inférieurs au courant nominal. On en déduit (ici aussi, contrairement à l'approche classique) que la bonne position est à 180° électrique et on ajoute cette valeur à la position estimée Pe à l'issue de quoi la position Pe se superpose à la position réelle Pr observée par le résolveur, et l'erreur E tombe à 0.

En plus d'éviter le risque de démagnétisation, l'un des avantages du procédé de l'invention est son faible risque de mettre le rotor en rotation au cours de l'essai, risque qui est toujours existant avec les très forts niveaux de courant de la solution classique quand la mesure de la position estimée présente un écart par rapport à la position réelle.

L'invention n'est pas limitée aux exemples illustrés. On peut notamment modifier la polarité du rotor sans sortir du cadre de la présente invention.

Le rotor peut coopérer avec tout type de stator, à bobinage distribué ou concentré.

L'expression « comportant un » doit être comprise comme étant synonyme de « comportant au moins un ».

## Revendications

1. Procédé pour déterminer la polarité d'un pôle de rotor (3) de machine électrique tournante (1) ayant une position estimée par rapport à un stator, le procédé comportant les étapes suivantes:
a) exciter en tension le stator de façon à générer successivement au sein d'une zone magnétique saturable dudit pôle deux flux magnétiques différents l'un en conjonction et l'autre en opposition avec le flux magnétique d'aimants du rotor définissant le pôle du rotor, de façon à saturer la zone magnétique saturable pour l'un au moins des flux magnétiques, et
b) déterminer la polarité du pôle en fonction des différences d'évolution dans le temps du courant généré dans le stator par les deux flux,
les courants résultants étant inférieurs à 50% du courant maximal avant démagnétisation (Iₘₐₓ).

2. Procédé selon la revendication précédente, dans lequel le rotor (3) comporte des aimants permanents (11) à basse densité d'énergie, notamment en ferrites.

3. Procédé selon l'une quelconque des revendications précédentes, qui est mis en œuvre à l'arrêt, c'est-à-dire avant la mise en rotation de la machine (1).

4. Procédé selon l'une quelconque des revendications précédentes, dans lequel l'excitation du stator en tension consiste à appliquer au stator une première et une deuxième tension qui ont une forme choisie dans la liste suivante : créneau de tension, rampe de tension, onde sinusoïdale de tension,
les première et deuxième tensions étant de signes opposés,
la deuxième tension étant de même amplitude que la première tension.

5. Procédé selon l'une quelconque des revendications précédentes, dans lequel les courants résultants sont compris entre 2,5% et 40% du courant maximal.

6. Procédé selon l'une quelconque des revendications précédentes, dans lequel on détermine à l'étape b) lequel des courants générés dans le stator par les deux flux magnétiques est le plus faible et/ou le plus en retard par rapport à l'autre.

7. Procédé selon la revendication précédente, dans lequel le pôle nord du rotor correspond au cas où le niveau de courant est le plus faible au bout d'une même durée et pour une même amplitude de la tension appliquée.

8. Procédé selon l'une quelconque des revendications précédentes, dans lequel, on détermine la position estimée du pôle du rotor par rapport au stator en appliquant des signaux à haute fréquence dans le stator puis en analysant les tensions et courant haute fréquence résultants pour en déduire la position d'un pôle du rotor.

9. Dispositif (25) pour déterminer la polarité d'un pôle de rotor (3) de machine électrique tournante (1) ayant une position estimée par rapport à un stator (2), le dispositif comportant:
a) Des moyens pour exciter en tension le stator de façon à générer successivement au sein d'une zone magnétique saturable dudit pôle deux flux magnétiques différents l'un en conjonction et l'autre en opposition avec le flux magnétique d'aimants du rotor définissant le pôle du rotor, de façon à saturer la zone magnétique saturable pour l'un au moins des flux magnétiques, et
b) des moyens pour déterminer la polarité du pôle en fonction des différences d'évolution dans le temps du courant généré dans le stator par les deux flux magnétiques,
les courants résultants étant inférieurs à 50% du courant maximal avant démagnétisation (Iₘₐₓ).

10. Dispositif selon la revendication précédente, dans laquelle une zone magnétique saturable (10, 12) est
(i) un pont de matière magnétique (10) ménagé entre des logements (9) du rotor (3) destinés à recevoir les aimants permanents (11), lesquels sont disposés de manière à définir les pôles du rotor, et/ou est
(*ii*) un pont de matière magnétique (12) disposé entre un logement (9) et l'entrefer de la machine.

11. Variateur (20) de fréquence pour moteur électrique, comportant un dispositif (25) pour déterminer la polarité selon la revendication précédente.

12. Machine électrique tournante (1) comportant :
- un moteur comportant un rotor (3) à aimants permanents (11), et
- un variateur (20) selon la revendication précédente, pour contrôler le moteur.

13. Machine selon la revendication précédente, dans laquelle le rotor (3) est à concentration de flux ou synchro-réluctant à aimants permanents.

14. Machine selon l'une des deux revendications précédentes, dans laquelle chaque pôle du rotor (3) comporte au moins une zone magnétique saturable (10,12).

15. Machine selon l'une des revendications 12 à 14 comportant un stator (2) bobiné sur dents ou à bobinage distribué.

## Patentansprüche

1. Verfahren zum Bestimmen der Polarität eines Rotorpols (3) einer drehenden elektrischen Maschine (1), der eine geschätzte Position in Bezug auf einen Stator hat, wobei das Verfahren die folgenden Schritte umfasst:
a) Spannungsanregung des Stators, so dass nacheinander in einem sättigbaren magnetischen Bereich des Pols zwei verschiedene magnetische Flüsse erzeugt werden, der eine gleichläufig und der andere gegenläufig zu dem magnetischen Fluss von Magneten des Rotors, die den Pol des Rotors definieren, so dass der sättigbare magnetische Bereich für mindestens einen der magnetischen Flüsse gesättigt wird, und
b) Bestimmen der Polarität des Pols in Abhängigkeit von den zeitlichen Verlaufsunterschieden des Stroms, der von den beiden Flüssen im Stator erzeugt wird,
wobei die resultierenden Ströme weniger als 50 % des Maximalstroms vor der Entmagnetisierung (Iₘₐₓ) betragen.

2. Verfahren nach dem vorhergehenden Anspruch, bei dem der Rotor (3) Permanentmagnete (11) mit niedriger Energiedichte aufweist, insbesondere aus Ferriten.

3. Verfahren nach einem der vorhergehenden Ansprüche, das im Stillstand ausgeführt wird, d. h. vor dem Indrehungversetzen der Maschine (1).

4. Verfahren nach einem der vorhergehenden Ansprüche, bei dem die Spannungsanregung des Stators darin besteht, an den Stator eine erste und eine zweite Spannung anzulegen, die eine aus der folgenden Liste ausgewählte Form haben: Spannungsrechteckimpuls, Spannungsrampe, sinusförmige Spannungswelle,
wobei die erste und die zweite Spannung entgegengesetzte Vorzeichen haben,
wobei die zweite Spannung die gleiche Amplitude wie die erste Spannung hat.

5. Verfahren nach einem der vorhergehenden Ansprüche, bei dem die resultierenden Ströme zwischen 2,5 % und 40 % des Maximalstroms betragen.

6. Verfahren nach einem der vorhergehenden Ansprüche, bei dem man im Schritt b) bestimmt, welcher der im Stator von den beiden magnetischen Flüssen erzeugten Ströme der schwächere und/oder der in Bezug auf den anderen am stärksten verzögerte ist.

7. Verfahren nach dem vorhergehenden Anspruch, bei dem der Nordpol des Rotors dem Fall entspricht, in dem der Strompegel nach einer gleichen Dauer und für eine gleiche Amplitude der angelegten Spannung am geringsten ist.

8. Verfahren nach einem der vorhergehenden Ansprüche, bei dem man die geschätzte Position des Pols des Rotors in Bezug auf den Stator bestimmt, indem man Hochfrequenzsignale im Stator anlegt und indem man anschließend die resultierenden Hochfrequenzspannungen und den Hochfrequenzstrom analysiert, um daraus die Position eines Pols des Rotors abzuleiten.

9. Vorrichtung (25) zum Bestimmen der Polarität eines Rotorpols (3) einer drehenden elektrischen Maschine (1), der eine geschätzte Position in Bezug auf einen Stator (2) hat, wobei die Vorrichtung umfasst:
a) Mittel zur Spannungsanregung des Stators, so dass nacheinander in einem sättigbaren magnetischen Bereich des Pols zwei verschiedene magnetische Flüsse erzeugt werden, der eine gleichläufig und der andere gegenläufig zu dem magnetischen Fluss von Magneten des Rotors, die den Pol des Rotors definieren, so dass der sättigbare magnetische Bereich für mindestens einen der magnetischen Flüsse gesättigt wird, und
b) Mittel zum Bestimmen der Polarität des Pols in Abhängigkeit von den zeitlichen Verlaufsunterschieden des Stroms, der von den beiden magnetischen Flüssen im Stator erzeugt wird,
wobei die resultierenden Ströme weniger als 50 % des Maximalstroms vor der Entmagnetisierung (Iₘₐₓ) betragen.

10. Vorrichtung nach dem vorhergehenden Anspruch, bei der ein sättigbarer magnetischer Bereich (10, 12) ist:
(i) eine Brücke aus magnetischem Material (10), die zwischen Aufnahmen (9) des Rotors (3) ausgebildet ist, die dazu bestimmt sind, die Permanentmagnete (11) aufzunehmen, die so angeordnet sind, dass sie die Pole des Rotors definieren, und/oder
(ii) eine Brücke aus magnetischem Material (12), die zwischen einer Aufnahme (9) und dem Luftspalt der Maschine angeordnet ist.

11. Frequenzumrichter (20) für einen Elektromotor mit einer Vorrichtung (25) zum Bestimmen der Polarität nach dem vorhergehenden Anspruch.

12. Drehende elektrische Maschine (1), umfassend:
- einen Motor, der einen Rotor (3) mit Permanentmagneten (11) umfasst, und
- einen Umrichter (20) nach dem vorhergehenden Anspruch zur Steuerung des Motors.

13. Maschine nach dem vorhergehenden Anspruch, bei welcher der Rotor (3) in Flusskonzentrations- oder Synchronreluktanzbauweise mit Permanentmagneten ausgeführt ist.

14. Maschine nach einem der beiden vorhergehenden Ansprüche, bei der jeder Pol des Rotors (3) mindestens einen sättigbaren magnetischen Bereich (10, 12) umfasst.

15. Maschine nach einem der Ansprüche 12 bis 14, die einen auf Zähne gewickelten Stator (2) oder einen Stator mit verteilter Wicklung umfasst.

## Claims

1. A method for determining the polarity of a pole of a rotor (3) of an electrical rotating machine (1) having an estimated position relative to a stator, the method comprising the following steps :
a) applying an excitation voltage to the stator so as to generate two different magnetic fluxes successively within a saturable magnetic zone of said pole, one flux in conjunction with and the other in opposition to the magnetic flux of magnets of the rotor defining the pole of the rotor, so as to saturate the saturable magnetic zone for at least one of the magnetic fluxes, and
b) determining the polarity of the pole on the basis of the differences in the temporal evolution of the current generated in the stator by the two magnetic fluxes,
the resultant currents being less than 50% of the maximum current before demagnetization (Imax).

2. The method as claimed in the preceding claim, in which the rotor (3) comprises permanent magnets (11) having a low energy density, in particular ferrite permanent magnets.

3. The method as claimed in either one of the preceding claims, which is implemented at standstill, that is to say before the machine (1) is set in rotation.

4. The method as claimed in any one of the preceding claims, in which the application of an excitation voltage to the stator consists in applying a first and a second voltage to the stator, which voltages have a form selected from the following list: square-wave voltage, voltage ramp, sine voltage wave,
the first and second voltages being of opposite sign,
the second voltage being of the same amplitude as the first voltage.

5. The method as claimed in any one of the preceding claims, in which the resultant currents are between 2.5% and 50% of the maximum current.

6. The method as claimed in any one of the preceding claims, in which in step b) it is determined which of the currents generated in the stator by the two magnetic fluxes is the weaker and/or the later in relation to the other.

7. The method as claimed in the preceding claim, in which the north pole of the rotor corresponds to the case in which the current level is lower at the end of a same duration and for a same amplitude of the applied voltage.

8. The method as claimed in any one of the preceding claims, in which the estimated position of the pole of the rotor in relation to the stator is determined by applying high-frequency signals to the stator and then by analyzing the resultant voltages and high-frequency current in order to deduce therefrom the position of a pole of the rotor.

9. A device (25) for determining the polarity of a pole of a rotor (3) of an electrical rotating machine (1) having an estimated position relative to a stator (2), the device comprising:
a) means for applying an excitation voltage to the stator so as to generate two different magnetic fluxes successively within a saturable magnetic zone of said pole, one flux in conjunction with and the other in opposition to the magnetic flux of magnets of the rotor defining the pole of the rotor, so as to saturate the saturable magnetic zone for at least one of the magnetic fluxes, and
b) means for determining the polarity of the pole on the basis of the differences in the temporal evolution of the current generated in the stator by the two magnetic fluxes,
the resultant currents being less than 50% of the maximum current before demagnetization (Imax).

10. The device as claimed in the preceding claim, in which a saturable magnetic zone (10, 12) is (i) a magnetic material bridge (10) formed between the seats (9) in the rotor (3) intended to receive the permanent magnets (11), which are disposed so as to define the poles of the rotor, and/or (*ii*) a magnetic material bridge (12) disposed between a seat (9) and the air gap of the machine.

11. A frequency variator (20) for an electric motor, comprising a device (25) for determining polarity as claimed in the preceding claim.

12. An electrical rotating machine (1) comprising:
- a motor comprising a rotor (3) having permanent magnets (11), and
- a variator (20) according to the preceding claim, for controlling the motor.

13. The machine as claimed in the preceding claim, in which the rotor (3) is a flux concentration or synchro-reluctant rotor having permanent magnets.

14. The machine as claimed in either one of the two preceding claims, in which each pole of the rotor (3) comprises at least one saturable magnetic zone (10, 12).

15. The machine as claimed in any one of claims 12 to 14, comprising a stator (2) wound over teeth or having distributed windings.
